# EUROPÄISCHE PATENTSCHRIFT

(11) **EP 2 848 395 B1**
(45) Veröffentlichungstag und Bekanntmachung des Hinweises auf die Patenterteilung: **01.11.2023**
(21) Anmeldenummer: 14184005.8
(22) Anmeldetag: 09.09.2014
(51) Int. Cl.: B29D 11/00, G02C 7/02

(54) **Verfahren zur Herstellung eines Brillenglas-Halb- oder -Fertigfabrikats.**
Method for manufacturing spectacle glass semi-finished or finished product.
Procédé de fabrication d'un verre de lunette fini ou semi-fini.

(30) Priorität: 11.09.2013 DE 102013218136
(43) Veröffentlichungstag der Anmeldung: 18.03.2015
(73) Patentinhaber: Carl Zeiss Vision International GmbH, 73430 Aalen (DE)
(72) Erfinder: Meschenmoser, Ralf, 73457 Essingen (DE); Winter, Karl-Heinz, 73457 Essingen (DE); Gorosics, Ralf, 89547 Gussenstadt (DE); Beeh, Roswitha, 73457 Essingen (DE)
(74) Vertreter: Carl Zeiss AG - Patentabteilung

(56) Entgegenhaltungen:
- US-A- 5 149 337
- US-A- 5 964 647
- US-A1- 2012 057 123
- US-A1- 2013 022 739

## Beschreibung

Die Erfindung betrifft ein Verfahren zur Herstellung eines Brillenglas-Halb- oder - Fertigfabrikats nach dem Oberbegriff des Patentanspruchs 1.

Man unterscheidet Brillenglas-Halbfertigfabrikate und Brillenglas-Fertigfabrikate. Als Halbfertigfabrikate, Halbfabrikate oder Halbfertigprodukte bezeichnet man in der Produktionswirtschaft teilweise fertig erzeugte Vorprodukte, welche entweder zur späteren Verarbeitung im eigenen Unternehmen auf Lager gelegt oder an andere Unternehmen geliefert und dort fertig produziert werden. Brillenglas-Halbfertigfabrikate sind Linsenrohlinge mit nur einer optisch fertig bearbeiteten Fläche (vgl. Heinz Diepes, Rolf Blendowske "Optik und Technik der Brille", Optische Fachveröffentlichung GmbH, Heidelberg, 2002, Seite 560). Als Fertigfabrikate (Fertigprodukte) bezeichnet man fertig erzeugte, verkaufsfähige Produkte, welche entweder sofort ausgeliefert werden oder für den späteren Verkauf im eigenen Unternehmen auf Lager gelegt werden. Brillenglas-Fertigfabrikate oder fertige Brillengläser sind Brillengläser mit zwei optisch fertig bearbeiteten optischen Flächen. Diese können endgerandet sein oder nicht (vgl. ebd., S. 559). Ein gerandetes Brillenglas ist demnach ein fertiges Brillenglas, das durch Randbearbeitung auf die endgültige Größe und Form gebracht wurde (vgl. ebd., S. 559).

Zur Beschreibung von nicht fertigen Brillengläsern wird häufig auch der Begriff Blanks verwendet. Blanks sind üblicherweise vorgeformte Materialstücke zur Herstellung von Brillengläsern oder -linsen in irgend einem Zustand vor der Beendigung der Oberflächenbearbeitung (vgl. ebd.; S. 556). Der Begriff Semifinished Blanks ist ein Synonym für den Ausdruck Halbfertigfabrikate. Die Begriffe Brillengläser und Brillenlinsen werden ebenfalls synonym verwendet.

Brillenglas-Halbfertigfabrikate und Brillenglas-Fertigfabrikate weisen jeweils eine für die objektseitige und eine für die gegenüberliegende augenseitige Anordnung für einen Brillenträger bestimmte optische Flächen und eine diese beabstandende Fläche auf. Die für die Anordnung auf der Objektseite bestimmte optische Fläche wird Vorderfläche bezeichnet, die für die Anordnung auf der Augenseite bestimmte optische Fläche wird Rückfläche genannt. Die dazwischen liegende entweder unmittelbar eine Kante bildend oder mittelbar über eine Kantenfläche einendseitig an die Vorderfläche und andernendseitig an die Rückfläche angrenzende Fläche bezeichnet man als Zylinderrandfläche.

Während in der Vergangenheit Brillengläser vorwiegend aus mineralischen Gläsern, insbesondere Krongläsern (Abbe-Zahl > 55) und Flintgläsern (Abbe-Zahl < 50) hergestellt wurden, sind mittlerweile Brillengläser aus einer Vielzahl an organischen Materialien erhältlich.

Derzeit werden Brillenglas-Halbfertigfabrikate oder -Fertigfabrikate mit sphärischen, asphärischen oder progressiven Vorderflächen in Massenfertigungen mittels Vorder- und Rückflächenformschalen und einem Dichtring abgegossen wie dies z.B. in den Dokumenten DE 3007572 C2, US 6,103,148 A oder JP 2008 191186 A beschrieben ist. Dies gilt für Materialien mit den Handelsbezeichnungen MR-7, MR-8, MR-10 und CR-39 / CR-607 und weitere. Bei den Materialien mit den Handelsbezeichnungen MR-7, MR-8, MR-10 handelt es ich um Polythiourethane, die von der Firma Mitsui Chemicals vertrieben werden. Die Abkürzung "MR" steht dabei für Mitsui Resin. CR-39/CR-607/CR-630 sind niedrigbrechende Materialien mit dem Brechwert von 1,50, die von der Firma PPG Industries vertrieben werden. Die Materialien CR-607 und CR-630 werden z.B. für photochrome Anwendungen eingesetzt.

Halbfertigfabrikate oder Fertigfabrikate für Brillengläser aus Polycarbonat werden in Metallformen mittels Spritzgusstechnik erzeugt. Dieses Herstellverfahren ist z.B. in der EP 0955147 A1 beschrieben.

Auftragsspezifische Rezeptbrillengläser, d.h. insbesondere individualisierte Einstärken- und Mehrstärkengläser und im Besonderen Gleitsicht- bzw. Progressivgläser werden durch mechanische Verfahren in ihre finale Form gebracht. Hierbei können die Außenformen rund, oval oder willkürlich, sogenannte Freiformen beschreibend, ausgebildet sein.

Die vorstehend beschriebenen Halbfertig- oder Fertigfabrikate werden häufig einem oder mehreren Veredelungsprozessen unterzogen. Insbesondere werden ein- oder beidseitig Funktionsschichten appliziert. Derartige Funktionsschichten sind Schichten, die die Brillengläser mit vorbestimmten und für den Brillenträger vorteilhaften Eigenschaften ausstatten, die die Brillengläser allein aufgrund ihrer Materialeigenschaften und Formgebung nicht hätten. Derartige vorteilhafte Eigenschaften sind neben optischen Eigenschaften wie z.B. Entspiegelung, Verspiegelung, Lichtpolarisierung, Färbung usw. auch mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften.

Die Applikation von Funktionsschichten erfolgt häufig mit Hilfe von Nassbeschichtungsprozessen. Unter Beschichten wird in der Fertigungstechnik eine Hauptgruppe der Fertigungsverfahren nach DIN 8580 verstanden, die zum Aufbringen einer festhaftenden Schicht aus formlosem Stoff auf die Oberfläche eines Werkstückes genutzt werden. Nassbeschichtungsprozesse sind solche Beschichtungsverfahren, bei dem der Ausgangszustand des Beschichtungsmaterials flüssig ist. Bei der Brillenglasfertigung sind insbesondere Tauchbeschichtungsprozesse und Rotationsbeschichtungsprozesse von besonderer Bedeutung.

Brillengläser (Halbfertig- oder Fertigfabrikate) werden in Tauschbeschichtungsprozessen zur Lackauftragung üblicherweise linear aus dem Tauchbad in Richtung der Flächennormalen der Vorder- oder Rückflächen herausgezogen. Dabei entsteht durch das Lackablaufverhalten eine Lackansammlung am tiefsten Punkt. Wenn zusätzlich dort noch ein Stützelement, wie z.B. eine Haltefeder oder eine Klebestelle das Ablaufverhalten das Lackes beeinträchtigt, wird die Lackanhäufung auf der optischen Fläche bis zu 3 bis 4 mm größer. Die Lackanhäufung reduziert die nutzbare optische Fläche und/oder kann zum kosmetischen Ausfall führen.

In Rotationsbeschichtungsverfahren werden Brillengläser (Halbfertig- oder Fertigfabrikate) mit Lack benetzt. Es erfolgt z.B. eine Applikation des Lacks mittels einer Dosiernadel oder durch waagerechtes oder schräges Eintauchen in einen mit Lack gefüllten Behälter. Zur Gleichverteilung der Lackschicht werden die optischen Linsen mit hinreichender Geschwindigkeit rotiert und der Lack abgeschleudert. Dabei sammelt sich eine Restmenge Lack an dem Übergang zwischen optischer Fläche und Zylinderrandfläche und bildet einen umlaufenden Lacksaum. Die Lackanhäufung reduziert die nutzbare optische Fläche und/oder kann zum kosmetischen Ausfall führen.

Bei unterstützenden Gasprozessen z.B. beim Umfluten mit Stickstoff währen der Aushärtung des Lacks, können an dem Übergang Turbulenzen entstehen, die dem Lack wiederum Strukturen abbilden, die z.B. in der Art von Verzahnungen ausgebildet sein können.

Während der Durchführung von Rotations- und Tauchbeschichtungsverfahren können sich je nach Prozessführung in der Lackschicht Defekte wie z.B. Gasblasen ausbilden. Diese können beim linearen Ausziehen oder Abschleudern an dem Übergang zwischen optischer Fläche und Zylinderrandfläche anhaften und unmittelbar zum Ausfall führen.

Beim Aushärten des z.B. mittels eines Rotations- und/oder Tauchbeschichtungsverfahrens applizierten Lacks kann es zu Spannungsunterschieden kommen. Diese können zu Lackrissen führen.

Aus der US 2012/0057123 A1 ist ein Verfahren zur Herstellung von Brillengläsern aus Rohlinsen bekannt. Die Rohlinsen weisen jeweils eine Vorderseite auf, die als eine Freiformfläche ausgebildet ist, welche aus wenigstens zwei sphärischen Bereichen besteht. US 2012/0057123 A1 offenbart ein Verfahren zur Herstellung von Brillengläsern gemäß dem Oberbegriff des Anspruchs 1.

Die US 5,964,647, von der die Erfindung ausgeht, beschreibt dass sich von den Kanten von Brillengläsern aus organischem Material Späne lösen können, die die oben beschriebenen Tauchbäder verschmutzen. Dieses Dokument schlägt daher vor, die Kanten der Brillengläser mit Hilfe eines abrasiven Verfahrens zu verrunden.

Die Aufgabe der Erfindung besteht darin, ein alternatives Verfahren zur Herstellung eines Brillenglas-Halb- oder Fertigfabrikats mit höherer Fertigungstoleranz gegenüber einem konventionellen Nassbeschichtungsprozess bereitzustellen.

Diese Aufgabe wird durch ein Verfahren zur Herstellung eines Brillenglas-Halb- Fertigfabrikats oder eines Brillenglas-Fertigfabrikats mit den Merkmalen des Patentanspruchs 1 gelöst. Vorteilhafte Ausführungen und Weiterbildungen der Erfindung sind Gegenstand der Unteransprüche.

Die Erfinder haben festgestellt, dass herkömmliche Brillenglas-Halb- oder -Fertigfabrikate entweder eine Kante oder eine Fase zwischen der Zylinderrandfläche und den optisch wirksamen Vorder- oder Rückflächen aufweisen. Kante bezeichnet allgemein eine Linie, in der zwei Flächen (hier Zylinderrandfläche und Vorderfläche einerseits und Zylinderrandfläche und Rückfläche andererseits), zusammenstoßen. Eine Fase ist eine abgeschrägte Fläche, die an einer Werkstückkante (hier Zylinderrandfläche und Vorderfläche einerseits und Zylinderrandfläche und Rückfläche andererseits), erzeugt wird.

In beiden Produktstufen Halbfertig- oder Fertigfabrikat sind Übergange zwischen optischer Fläche und Zylinderrand scharfkantig oder gerade angefast. Dadurch ergibt sich bei vielen nasschemischen Veredelungsprozessen eine Abrisskante mit den oben beschriebenen Auswirkungen. Insbesondere nähere Untersuchungen von Tauchbeschichtungsprozessen und Rotationsbeschichtungsprozessen haben gezeigt, dass der für die Applikation der Beschichtung vorgesehene Lack nicht auf oder über den Zylinderrand ausreichend ablaufen kann, da der kantige Übergang eine Ablaufbarriere bildet. Diese Ergebnisse sind auf jegliche Arten von Nassbeschichtungsprozessen übertragbar.

Das erfindungsgemäße Verfahren zur Herstellung eines Brillenglas-Halb- oder -Fertigfabrikats mit einer Vorderfläche, einer Rückfläche, einer Zylinderrandfläche, einer vorderen Kantenfläche mit einem Vorderflächenübergang zu der Vorderfläche und einem vorderen Zylinderrandflächenübergang zu der Zylinderrandfläche und/oder einer hinteren Kantenfläche mit einem Rückflächenübergang zu der Rückfläche und einem hinteren Zylinderrandflächenübergang zu der Zylinderrandfläche ist, bei dem der Vorderflächenübergang mit einer Abrundung versehen wird und/oder bei dem der Rückflächenübergang mit einer Abrundung versehen wird, ist nunmehr dadurch gekennzeichnet, dass die Abrundung des Vorderflächenübergangs und/oder die Abrundung des Rückflächenübergangs angegossen werden und dass der hintere Zylinderrandflächenübergang mit einer Abrundung versehen wird, die angegossen wird. Dies kann bereits beim Abgießen des Brillenglas-Halb- oder -Fertigfabrikats unter Verwendung von Formschalen oder unter Anwendung des Spritzgussverfahrens erfolgen. Kantenfläche bedeutet hier die Fläche, die die jeweiligen optischen Flächen (unabhängig von deren Bearbeitungszustand) miteinander verbindet. Unter Abrundung versteht man eine gerundete Glättung im Übergangsbereich, die stetig und ohne Knick verläuft.

Dieser gekrümmte Übergang unterstützt das Ablaufverhalten bei einem Tauchbeschichtungsprozess so positiv, so dass keine Lackanhäufung auf der optischen Fläche zurückbleibt und der nutzbare Durchmesser größer wird als bei Verwendung von Halb- oder Fertigfabrikaten herkömmlicher Gestalt.

Bei einem Rotationsbeschichtungsprozess unterstützt der radiale Übergang das Abschleuderverhalten so positiv, dass Rotationsgeschwindigkeiten vervielfacht werden können und es zu keinem Lackabriss (fliegende Tropfen) kommt, sondern die Lackanhäufung sanft auf den radialen Übergang und den Zylinderrand transportiert wird. Es bleibt wenig oder keine Lackanhäufung auf der optischen Fläche zurück und der nutzbare Durchmesser wird gegenüber der Verwendung eines herkömmlichen Halb- oder Fertigfabrikats größer.

Bei unterstützenden Gasprozessen wie z.B. beim Umfluten mit Stickstoff währen der Aushärtung des Lacks unterstützt der durch die Abrundung gebildete radiale Übergang die Gasumspülung in der Form, dass an dem Übergang zwischen optischer Wirkfläche und Zylinderrandfläche eine laminare Strömung der Gases entsteht und die Ausfallstrukturen eliminiert werden.

Der radiale Übergang bietet auch keine Barrieren mehr für Defekte z.B. Luftblasen. Diese können im Falle eines Tauchbeschichtungsverfahrens ungehindert ablaufen oder im Falle eines Rotationsbeschichtungsverfahrens abgeschleudert werden.

Durch den radialen Übergang ist der Lacksaum auf der optischen Wirkfläche minimiert. Dies führt zu gleichmäßigeren Schichtdicken und zu drastisch reduzierten Spannungen, die wiederum aber keine Durchdringungskante mehr haben. Der Fehler ist eliminiert. Die oben beschriebene Aufgabe wird durch die erfindungsgemäße Ausgestaltung des Verfahrens vollumfänglich gelöst.

Es hat sich als günstig in Bezug auf die Erreichung der vorstehenden Effekte bei der Nassbeschichtung herausgestellt, wenn die Abrundung des Vorderflächenübergangs einen Krümmungsradius aufweist, der größer als 0,2 mm, insbesondere größer als 0,3 mm, weiter insbesondere größer als 0,5 mm, vorzugsweise größer als 1 mm ist und/oder dass die Abrundung des Rückflächenübergangs einen Krümmungsradius aufweist, der größer als 0,2 mm, insbesondere größer als 0,3 mm, weiter insbesondere größer als 0,5 mm, vorzugsweise größer als 1 mm ist.

Der Krümmungskreis (auch Schmiegekreis oder Schmiegkreis genannt) zu einem bestimmten Punkt einer ebenen Kurve ist der Kreis, der die Kurve in diesem Punkt am besten annähert. Den Mittelpunkt des Krümmungskreises nennt man Krümmungsmittelpunkt. Sein Radius, der Krümmungsradius, ist der Kehrwert der Krümmung der Kurve in diesem Punkt. Seine Tangente in diesem Punkt stimmt mit der Tangente der Kurve überein. Da die Krümmung einer Kurve im Allgemeinen örtlich variiert, schmiegt sich die Kurve im Allgemeinen nur in einer infinitesimal kleinen Umgebung an den Krümmungskreis an.

Krümmungsradius der Abrundung bezeichnet jeweils den Krümmungsradius der Abrundung in einer Ebene durch die durch den Schwerpunkt des Halb- oder Fertigfabrikats verlaufende Mittenachse am Schnittpunkt dieser Ebene durch diese Achse mit der Kante bzw. Linie zwischen der jeweiligen optischen Fläche (Vorderfläche oder Rückfläche) und der Zylinderrandfläche. Es gibt also eine Vielzahl an Krümmungsradien entlang dieser Kante, die Vorteilhafterweise alle die vorstehend angegebene(n) Bedingung(en) erfüllen.

Weiter ist es wünschenswert, wenn die Abrundung des Vorderflächenübergangs einen Krümmungsradius aufweist, der kleiner als 5 mm, insbesondere kleiner als 3 mm, weiter insbesondere kleiner als 2,5 mm, vorzugsweise kleiner als 2 mm ist und/oder dass die Abrundung des Rückflächenübergangs einen Krümmungsradius aufweist, der kleiner als 5 mm, insbesondere kleiner als 3 mm, weiter insbesondere kleiner als 2,5 mm, vorzugsweise kleiner als 2 mm ist. Damit wird erreicht, dass der Lackabriss mit hinreichend hoher Sicherheit verhindert wird.

Als sehr günstig hat es sich herausgestellt, wenn die Abrundung einen Krümmungsradius im Bereich zwischen 0,2 mm und 3 mm, ggf. im Bereich zwischen 0,5 mm und 3 mm aufweist.

Die Abrundung des Vorderflächenübergangs kann sich über einen Winkel -gemessen in Bezug auf den oben definierten Krümmungsmittelpunkt ausgehend vom Punkt auf der Kante zwischen der Vorderfläche und Kantenfläche- erstrecken, der größer als 15°, insbesondere größer als 20°, weiter insbesondere größer als 25°, vorzugsweise größer als 30° ist. Diese Winkelbereiche für die Abrundung im Bereich des Vorderflächenübergangs haben sich als hinreichend für die Gewährleistung eines zusammenhängenden flüssigen Lackfilms beim Nassbeschichtungsprozess erwiesen. Unterstützend wirkt auch die in gleicher Richtung verlaufende Krümmung der konvex gekrümmten Vorderfläche.

Die Abrundung des Rückflächenübergangs kann sich über einen Winkel -gemessen in Bezug auf den oben definierten Krümmungsmittelpunkt ausgehend vom Punkt auf der Kante zwischen der Rückfläche und der Kantenfläche- erstrecken, der größer als 25°, insbesondere größer als 30°, weiter insbesondere größer als 35°, vorzugsweise größer als 40° ist. Aufgrund der gegenläufigen Krümmung der konkav gekrümmten Rückfläche ist es zur Vermeidung eines Lackfilmabrisses unter Umständen sogar erforderlich, den Winkelbereich größer zu wählen als den der Abrundung des Vorderflächenübergangs.

Die Form der Abrundung kann im Querschnitt ein Kreisabschnitt, eine Ellipse oder eine Parabel beschreiben. Wesentlich ist nur der absatzfreie und sanfte Übergang der optischen Wirkfläche auf die Kantenfläche. Der Übergang am Zylinderrand ist untergeordnet, sollte wenn möglich aber auch absatz- und knickfrei erfolgen.

Aus diesem Grund sieht die Erfindung in einer weiteren Ausgestaltung vor, dass der vordere Zylinderrandflächenübergang mit einer Abrundung versehen wird. Auch die Abrundung des vorderen Zylinderrandflächenübergangs können angegossen werden. Diese Maßnahme wirkt bei der Nassbeschichtung lackabrisshemmend, allerdings nicht in dem Umfang wie die Abrundungen im Bereich der optischen Flächen.

Schließlich wird ein Verfahren der vorstehend beschriebenen Art vorgeschlagen, welches erfindungsgemäß dadurch gekennzeichnet ist, dass - das Brillenglas-Halb- oder -Fertigfabrikat mit dem als Abrundung ausgebildeten Vorderflächenübergang und/oder mit dem als Abrundung ausgebildeten Rückflächenübergang nassbeschichtet wird.

Vor dem Nassbeschichten bedeutet in diesem Zusammenhang, dass das zu beschichtende Brillenglas-Halb- oder -Fertigfabrikat die entsprechend(n) Abrundung(en) bereits aufweist. Diese können bereits beim Abgießen oder Spritzgießen der Rohlinge eingebracht sein durch eine entsprechende Formgebung der Formschalen oder Gussschalen, während der Flächenbearbeitung der optischen Fläche(n) oder nachträglich, nach Abgießen/Spritzgießen und optischer Flächenbearbeitung, durch entsprechende Nachbearbeitung der Rohlinge mit einem geeigneten abrasiven Werkezeug.

Die Erfindung lehrt demzufolge die Verwendung eines eingangs beschriebenen Brillenglas-Halb- oder -Fertigfabrikats mit abgerundeten Kanten beim Nassbeschichten zum Zwecke der Applikation einer Funktionsschicht.

Die Erfindung wird nachfolgend anhand der Zeichnung näher beschrieben. Es zeigen:
- Figur 1: a) ein Brillenglas-Halb-Fertigfabrikat (Querschnitt)
b) ein Fertigfabrikat eines Minus-Brillenglases (Querschnitt)
c) ein Fertigfabrikat eines Plus-Brillenglases (Querschnitt)
d) einen Ausschnitt des Fertigfabrikats nach der Figur 1b) in vergrößerter Darstellung
- Figur 2: eine Randbearbeitung eines Brillenglas-Halbfabrikats mit Hilfe eines Mehrschneidenfräsers mit Anlaufrolle zur Erzeugung einer Abrundung am Übergang zwischen Vorderfläche und Zylinderrandfläche
- Figur 3: eine erste Variante einer Flächenbearbeitung einer der optischen Wirkflächen zur Erzielung der gewünschten dioptrischen Wirkung des Brillenglases und der Kanten zur Erzeugung von Abrundungen an den Übergängen zwischen den optischen Wirkflächen und der Zylinderrandfläche
- Figur 4: eine zweite Variante einer Flächenbearbeitung einer der optischen Wirkflächen zur Erzielung der gewünschten dioptrischen Wirkung des Brillenglases und der Kanten zur Erzeugung von Abrundungen an den Übergängen zwischen den optischen Wirkflächen und der Zylinderrandfläche
- Figur 5: ein Fertigfabrikat während unterschiedlicher Phasen eines Tauchbeschichtungsprozesses (schematische Querschnittsdarstellung)
a) das Fertigfabrikat taucht in das Tauchbad ein
b) das Fertigfabrikat wird aus dem Tauchbad herausgezogen
c) das Fertigfabrikat hat das Tauchbad verlassen
- Figur 6: unterschiedliche Brillenlinsen bei einem Rotationsbeschichtungsprozess
a) Rückflächenbeschichtung einer Pluslinse
b) Rückflächenbeschichtung einer Minuslinse
c) Vorderflächenbeschichtung eines Halbfabrikats mit einer Basiskurve von 0,5 dpt
d) Vorderflächenbeschichtung eines Halbfabrikats mit einer Basiskurve von 12 dpt
e) Vorderflächenbeschichtung einer Pluslinse
f) Vorderflächenbeschichtung einer Minuslinse

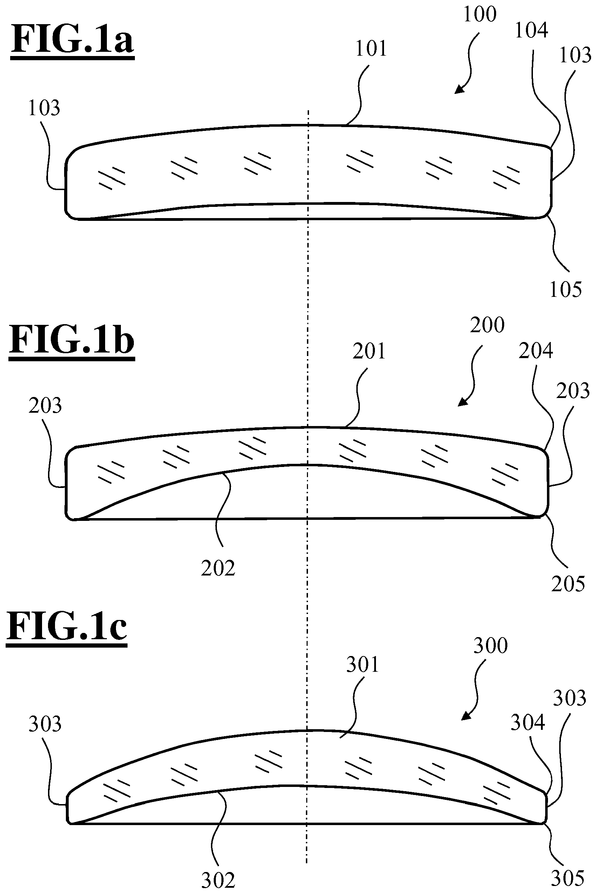

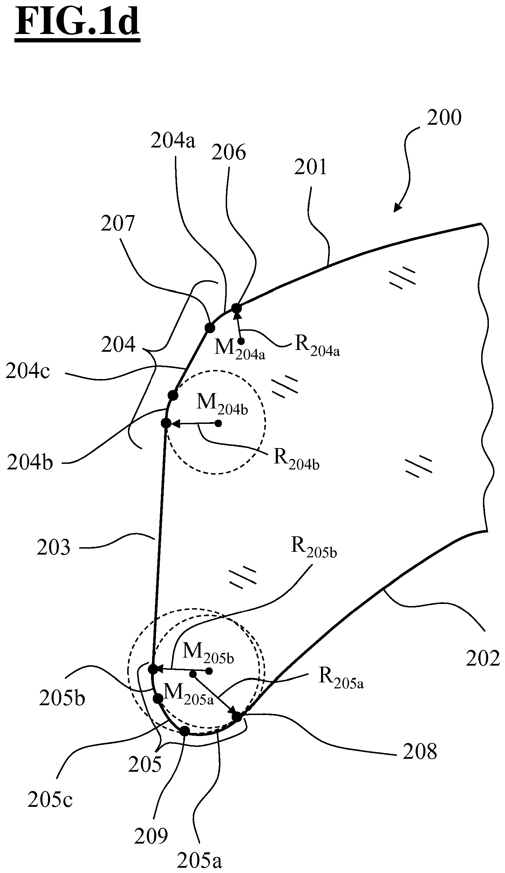

Die Figur 1a) zeigt ein Brillenglas-Halb-Fertigfabrikat 100 im Querschnitt, die Figur 1b) zeigt ein Fertigfabrikat eines Minus-Brillenglases 200 im Querschnitt und die Figur 1c) zeigt ein Fertigfabrikat 300 eines Plus-Brillenglases im Querschnitt. Die Figur 1d) zeigt einen Ausschnitt des Fertigfabrikats 200 nach der Figur 1b) in vergrößerter Darstellung.

Die (Halb-) Fertigfabrikate 100, 200, 300 weisen jeweils eine konvexe Vorderfläche 101, 201, 301, eine konkave Rückfläche 102, 202, 302 und eine kreiszylindermantelförmige Zylinderrandfläche 103, 203, 303 auf. Bei allen drei Fabrikaten 100, 200, 300 weist die konvexe Vorderfläche 101, 201, 301 bereits die finale Krümmung auf. Diese Krümmung wird also während der nachfolgenden Prozessschritte nicht mehr verändert. Diese Vorderfläche 101, 201, 301 hat also für sichtbares Licht bereits die gewünschte Brechkraft.

Das Halbfabrikat 100 weist eine konkave Rückfläche 102 auf, die noch nicht die finale Krümmung erhalten hat. Diese Rückfläche 102 erhält erst in einem weiteren üblicherweise abrasiven Verfahren die finale Krümmung. Bei den Fertigfabrikaten 200, 300 weisen auch die Rückflächen 202, 302 zur Erzielung der gewünschten dioptrischen Wirkung des Brillenglases 200, 300 die endgültige Krümmung auf. Eine formgebende Bearbeitung ist nicht mehr vorgesehen.

Bei allen drei Fabrikaten 100, 200, 300 gibt es Flächen 204, 205, die weder zur Erzielung der gewünschten dioptrischen Wirkung vorgesehenen jeweiligen Vorder- und Rückflächen 101, 102, 201, 202, 301, 302 zugeordnet sind, noch der jeweiligen Zylinderrandfläche 103, 203, 303 zugehören. Diese Flächen 104, 105, 204, 205, 304, 305 werden nachfolgend als Kantenflächen 104, 105, 204, 205, 304, 305 bezeichnet. Sie entsprechen den Fasenflächen, also den abgeschrägten Flächen herkömmlicher Halb- oder Fertigfabrikate.

Die die Vorderfläche 101, 201, 301 mit der Zylinderrandfläche 103, 203, 303 verbindende Kantenfläche 104, 204, 304 wird nachfolgend als vordere Kantenfläche 104, 204, 304, die die Rückfläche 102, 202, 302 mit der Zylinderrandfläche 103, 203, 303 verbindende Kantenfläche 105, 205, 305 wird nachfolgend als hintere Kantenfläche 105, 205, 305 bezeichnet.

Die vordere Kantenfläche 104, 204, 304 weist einen Vorderflächenübergang 204a zu der Vorderfläche 101, 201, 301 und einen vorderen Zylinderrandflächenübergang 204b zu der Zylinderrandfläche 103, 203, 303 auf. Die hintere Kantenfläche 105, 205, 305 weist einen Rückflächenübergang 205a zu der Rückfläche und einen hinteren Zylinderrandflächenübergang 205b zu der Zylinderrandfläche 103, 203, 303 auf. Diese Übergänge 204a, 204b, 205a, 205b sind lediglich in der Zeichnungsfigur 1d) mit Bezugszeichen kenntlich gemacht.

Der Vorderflächenübergang 204a ist als Abrundung ausgebildet. Weiter ist auch der Rückflächenübergang 205a als Abrundung ausgebildet. Die Form der jeweiligen Abrundung kann im gezeigten Querschnitt z.B. einen Kreisabschnitt, einen Abschnitt einer Ellipse oder einen Abschnitte einer Parabel oder eine sonstwie in einer Richtung gekrümmte Kontur beschreiben. Wesentlich ist nur der absatzfreie und sanfte (knickfreie) Übergang der jeweiligen optischen Wirkfläche 201, 202 auf die Fasenfläche 204, 205. Die Abrundung 204a, 205a kann sehr klein sein und einen Krümmungsradius R von 0,2 mm oder -wenn genügend Freiraum besteht- bis zu R = 3mm betragen. In der Zeichnungsfigur 1d) ist der Krümmungsradius des Vorderflächenübergangs 204a mit dem Bezugszeichen R₂₀₄ₐ und des Rückflächenübergangs 205a mit dem Bezugszeichen R₂₀₅ₐ gekennzeichnet.

Die Abrundung des Vorderflächenübergangs 204a erstreckt sich im vorliegenden Ausführungsbeispiel über einen Winkel α₂₀₄ₐ -gemessen in Bezug auf den oben definierten Krümmungsmittelpunkt M₂₀₄ₐ ausgehend vom Punkt 206 auf der Kante zwischen der Vorderfläche 201 und der Kantenfläche 204 bis zu dem Punkt 207, an dem die Krümmung verschwindet und sich in einem linearen Abschnitt 204c fortsetzt-, der etwa 35° beträgt. Die Abrundung des Rückflächenübergangs 205a erstreckt sich im vorliegenden Ausführungsbeispiel über einen Winkel α₂₀₅ₐ -gemessen in Bezug auf den oben definierten Krümmungsmittelpunkt M₂₀₅ₐ ausgehend vom Punkt 208 auf der Kante zwischen der Rückfläche 202 und der Kantenfläche 205 bis zu dem Punkt 209, an dem die Krümmung verschwindet und sich in einem linearen Abschnitt 205c fortsetzt-, der etwa 40° beträgt.

Der jeweilige Übergang 204b, 205b am Zylinderrand 203 ist untergeordnet, sollte wenn möglich aber auch stetig und knickfrei verlaufen, wie dies in der Zeichnungsfigur 1d) exemplarisch gezeigt ist. Auch diese Krümmungsradien R_{204b}, R_{205b} sind bevorzugt im Bereich zwischen 0,2 mm und 3 mm. Die entsprechenden Winkelbereiche, über die sich die Abrundungen 204b, 205b erstrecken betragen im Ausführungsbeispiel wiederum 35° und 40°.

Im Idealfall erstrecken sich die Abrundungen über die gesamten Kantenflächen, die die Vorderfläche mit der Zylinderrandfläche und die Zylinderrandfläche mit der Rückfläche verbinden. Es sei darauf hingewiesen, dass in diesem Fall eine Schnittlinie der Kantenfläche mit einer durch die Mittenachse des Zylinderrands verlaufende Ebene keine Wendepunkte aufweist. Die Abrundungen erstrecken sich demnach bezogen auf den Krümmungsmittelpunkt des Vorderflächenübergangs einerseits und bezogen auf den Krümmungsmittelpunkt des Rückflächenübergangs im allgemeinen über Winkelbereiche, die im Bereich zwischen 85° und 110° sind.

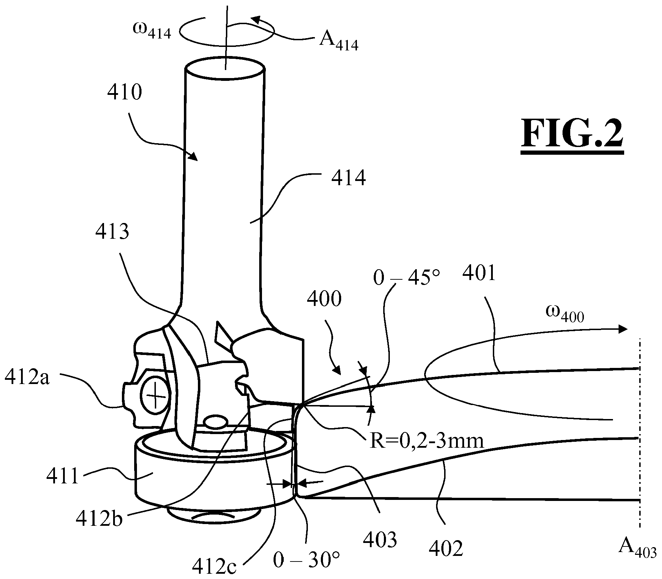

Die oben beschriebenen Abrundungen, insbesondere die zuletzt beschriebenen Abrundungen, die sich über die gesamten Kantenflächen (Fasenflächen) erstrecken, können abweichend von der Erfindung auch nachträglich mit Hilfe eines geeigneten Fräswerkzeugs erzeugt werden. Die Figur 2 zeigt beispielhaft eine derartige Randbearbeitung eines Brillenglas-Halbfabrikats 400 mit Hilfe eines Mehrschneidenfräsers 410 mit Anlaufrolle 411.

Der Figur 2 entnimmt man wiederum die charakteristischen Bestandteile des Brillenglas-Halbfabrikats 400, nämlich die fertige konvexe Vorderfläche 401, die Rückfläche 402 und die Zylinderrandfläche 403.

Der Zeichnungsfigur entnimmt man weiter die wesentlichen Bestandteile des Mehrschneidenfräsers 410, nämlich die Diamantschneiden 412a, 412b, 412c, die an einem Messerkopf 413 angebracht sind, eine den Messerkopf 413 mit den Diamantschneiden 412a, 412b, 412c tragende, rotierend antreibbare Spindel 414 und die unterhalb des Messerkopfs 413 in Verlängerung der Spindel 414 drehbar gelagerte Auflaufrolle 411.

Zum Anbringen der Abrundungen werden das Halbfabrikat 400 um ihre Randzylindermittenachse A₄₀₃ und der Messerkopf 413 um die Spindelmittenachse A₄₁₄ rotierend angetrieben. Die Rotationsbewegungen sind in der Zeichnung mit den Bezugszeichen ω₄₁₄ und ω₄₀₀ gekennzeichnet.

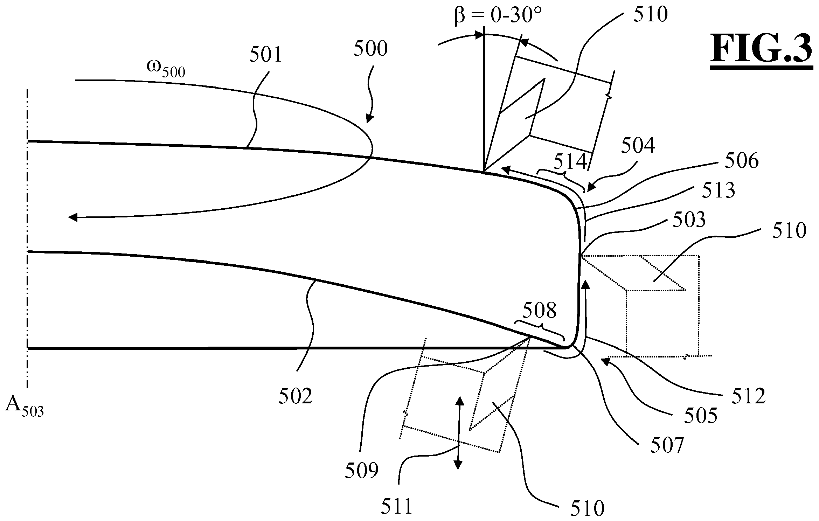

Mit Hilfe der Figur 3 wird nachfolgend eine erste Variante einer Flächenbearbeitung der Vorderfläche 501 eines Halbfabrikats 500 mit vorgefertigter Rückfläche 502 zur Erzielung der gewünschten dioptrischen Wirkung des Brillenglases und einer Bearbeitung der Kante 504 zwischen der Vorderfläche 501 und der Zylinderrandfläche 503 und der Kante 505 zwischen der Rückfläche 502 und der Zylinderrandfläche 503zur Erzeugung von Abrundungen 506, 507 an den Übergängen zwischen den optischen Wirkflächen 501, 502 und der Zylinderrandfläche 503 beschrieben. Die Bearbeitung erfolgt mit Hilfe einer Hochgeschwindigkeitsschneidemaschine, wie sie z.B. in der WO 97/13603 A2 beschrieben ist oder von der Schneider GmbH & Co. KG unter der Produktgruppenbezeichnung HSC vertrieben wird. Das Bearbeitungswerkzeug umfasst eine Diamantspitze 510, die spiralförmig von außen zum Zentrum der jeweiligen optischen Fläche geführt wird und dabei zur Erzielung der gewünschten Krümmung Hubbewegungen ausführt. Eine detaillierte Beschreibung entnimmt man z.B. der vorstehend genannten Veröffentlichung WO 97/13603 A2.

Der Figur 3 entnimmt man das Halbfabrikat 500 im Halbschnitt und die Diamantspitze 510 an unterschiedlichen Positionen auf dem Halbfabrikat 500. Das Halbfabrikat 500 wird um ihre Randzylindermittenachse A₅₀₃ rotatorisch mit der Winkelgeschwindigkeit ω₅₀₀ angetrieben. Die Diamantspitze 510 wird, während sich das Halbfabrikat 500 mit einer Geschwindigkeit von mehreren tausend Umdrehungen pro Minute dreht, ausgehend von einem am Rand 508 der Rückfläche 502 liegenden Punkt 509 eine Hubbewegung 511 in Richtung der Randzylindermittenachse A₅₀₃ ausführend radial nach außen geführt. Zur Erzeugung der Abrundung 507 wird bei der zunächst radialen Bewegung 512 des Werkzeugs die Anstellrichtung der Diamantspitze 510 derart nachgeführt, dass der Anstellwinkel β zur Normalen der zu erzielenden Fläche stets zwischen 0 und 30° bleibt. Die zunächst radiale Bewegung 512 des Werkzeugs 510 geht am Zylinderrand 503 in eine Bewegung 512, 513 in Richtung der Randzylindermittenachse A₅₀₃ über, bevor sie im Bereich 514 des vorderflächenseitigen Endes der Randzylinderfläche 503 unter Nachführung des Anstellwinkels β in eine radiale Bewegung 513 nach innen zur Erzeugung der Abrundung 506 übergeht. Nachfolgend wird dann die Vorderfläche 501 in an sich bekannter Weise mit dem Diamantwerkzeug 510 bearbeitet.

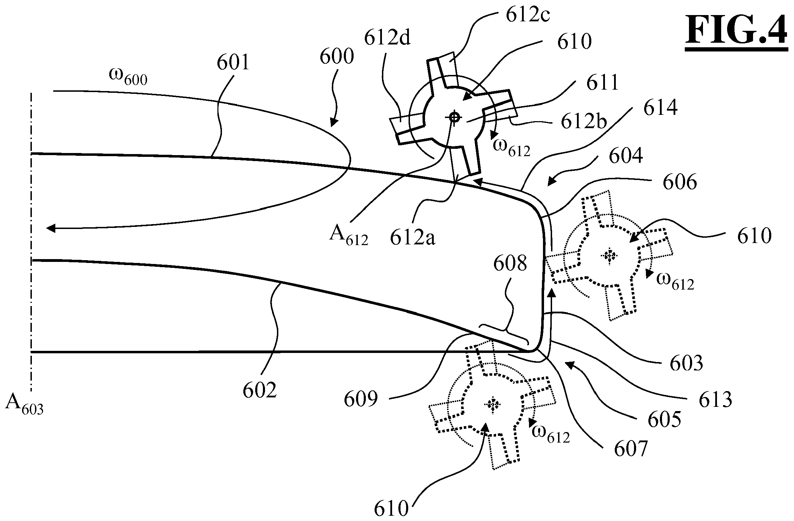

Der Figur 4 entnimmt man eine zweite Variante einer Flächenbearbeitung der optisch wirksamen Vorderfläche 601 eines Halbfabrikats 600 zur Erzielung der gewünschten dioptrischen Wirkung des Brillenglases und der Kanten 604, 605 des Halbfabrikats 600 zur Erzeugung von Abrundungen 606, 607 an den Übergängen zwischen den optischen Wirkflächen 601, 602 und der Zylinderrandfläche 603.

Abweichend von der in der Figur 3 dargestellten Ausführungsvariante ist ein Diamantfräser 610 als Bearbeitungswerkzeug eingesetzt. Der Diamantfräser 610 hat einen mit der Winkelgeschwindigkeit ω₆₁₁ rotatorisch um seine Mittenachse A₆₁₁ antreibbaren Messerkopf 611 mit vier Diamantschneiden 612a, 612b, 612c, 612d.

Das Halbfabrikat 600 wird wie im vorigen Ausführungsbeispiel um ihre Randzylindermittenachse A₆₀₃ rotatorisch mit der Winkelgeschwindigkeit ω₆₀₀ angetrieben. Der Diamantfräser 610 wird, während sich das Halbfabrikat 600 mit der Winkelgeschwindigkeit ω₆₀₀ von mehreren tausend Umdrehungen pro Minute dreht, ausgehend von einem am Rand 608 der Rückfläche 602 liegenden Punkt 609 radial nach außen, dann längs der Zylinderrandfläche 603 und schließlich wieder radial nach innen geführt. Die Bewegungsrichtungen des Diamantfräsers 610 sind in der Zeichnung mit Hilfe der durch die Bezugszeichen 613, 614 gekennzeichneten Pfeile angedeutet.

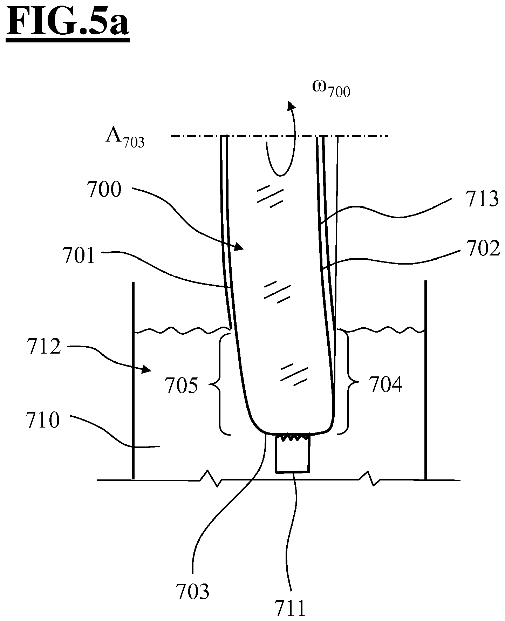

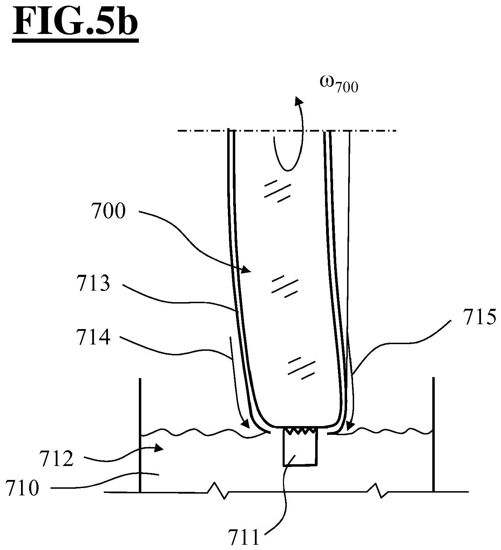

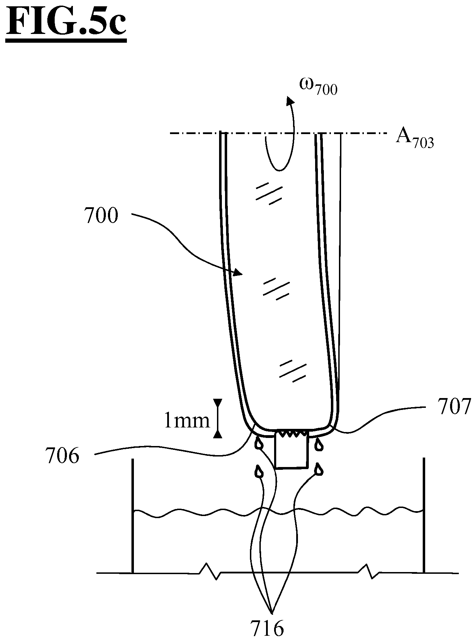

Die Figur 5 zeigt ein Fertigfabrikat 700 während unterschiedlicher Phasen eines Tauchbeschichtungsprozesses in schematischer Querschnittsdarstellung. Die Figur 5a) zeigt das in das Tauchbad 710 eingetauchte Fertigfabrikat 700. Das Fertigfabrikat 700 wird von einer Klammer 711 an dessen Zylinderrandfläche 703 gehalten. Das Fertigfabrikat 700 ist um ihre Randzylindermittenachse A₇₀₃ mit der Winkelgeschwindigkeit ω₇₀₀ rotatorisch angetrieben. Dabei findet eine Benetzung der in das Tauchbad 710 eintauchenden Bereiche 704, 705 der Vorderfläche 701 und der Rückfläche 702 mit Lack 702 statt. Der Lack 712 verteilt sich aufgrund der Rotationsbewegung ω₇₀₀ des Fertigfabrikats 700 über dessen gesamten Vorder- und Rückflächen 701, 702 und bildet dort einen Lackfilm 713.

Wird das Fertigfabrikat 700 wie in der Figur 5b) gezeigt aus dem Tauchbad 710 herausgezogen, so fließt der Lackfilm 713 aufgrund Flieh- und Schwerkraft ich Richtung Tauchbad 710, wie dies mit Hilfe der Pfeile 714, 715 angedeutet ist.

Wird das Fertigfabrikat 700 wie in der Figur 5c) gezeigt ganz aus dem Tauchbad 710 herausgezogen, so wird der überschüssige Lack 716 zurück in das Tauchbad 710 abtropfen. Der abgerundete Übergang 706, 707 zwischen den optischen Flächen 701, 702 und der Zylinderrandfläche 703 unterstützt das Ablaufverhalten so positiv, dass keine Lackanhäufung auf der jeweiligen optischen Fläche 701, 702 zurückbleibt und der nutzbare Durchmesser größer wird.

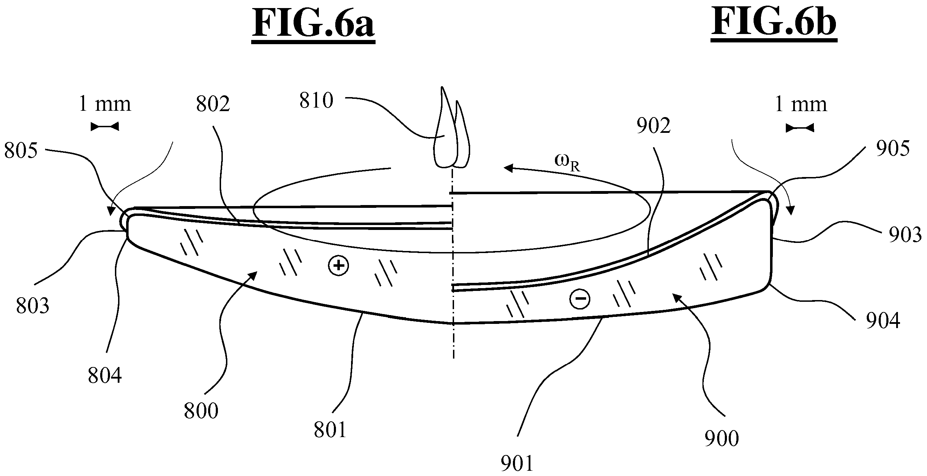

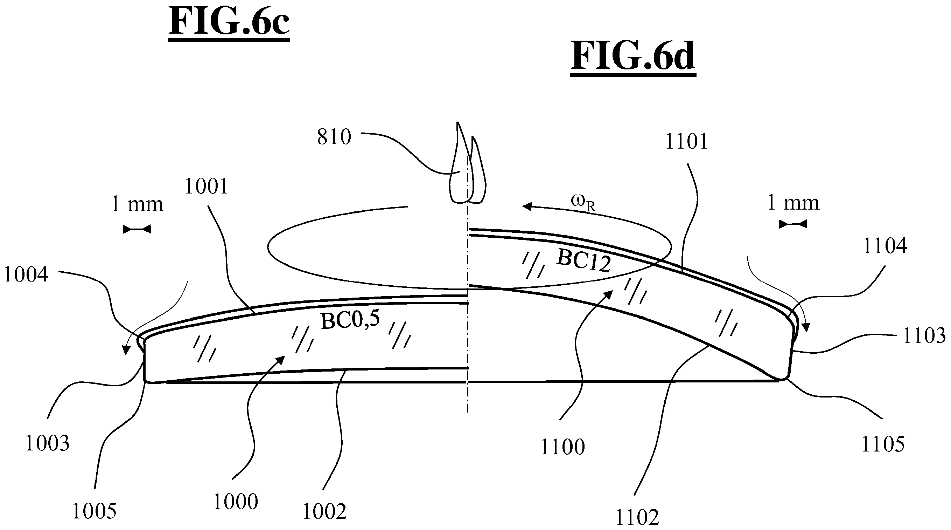

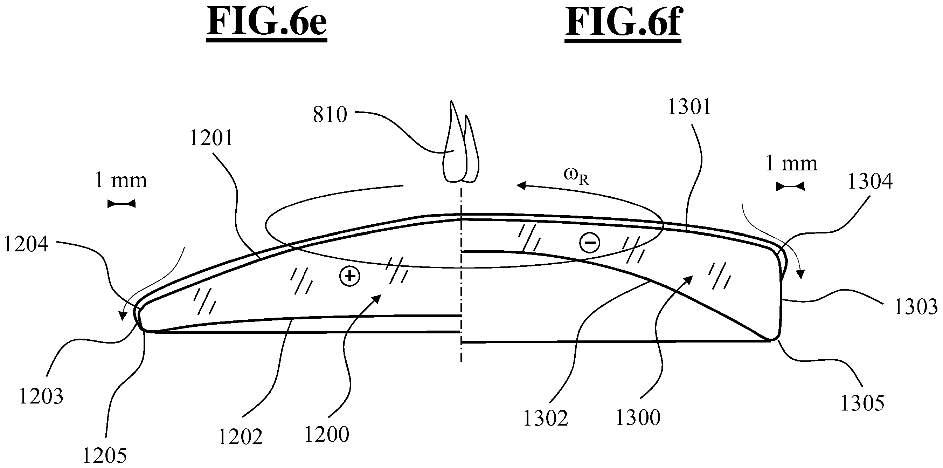

Die Figur 6 zeigt unterschiedliche Brillenlinsen 800, 900, 1000, 1100, 1200, 1300 bei einem Rotationsbeschichtungsprozess. Die Teilfigur 6a) zeigt eine Rückflächenbeschichtung einer Pluslinse 800. Die Teilfigur 6b) zeigt eine Rückflächenbeschichtung einer Minuslinse 900. Die Teilfigur 6c) zeigt eine Vorderflächenbeschichtung eines Halbfabrikats 1000 mit einer Basiskurve von 0,5 dpt. Die Teilfigur 6d) zeigt eine Vorderflächenbeschichtung eines Halbfabrikats 1100 mit einer Basiskurve von 12 dpt. Die Teilfigur 6e) zeigt eine Vorderflächenbeschichtung einer Pluslinse 1200 und die Teilfigur 6f) zeigt eine Vorderflächenbeschichtung einer Minuslinse 1300.

Die Brillenlinsen 800, 900, 1000, 1100, 1200, 1300 werden mit der Winkelgeschwindigkeit ω_{R} rotatorisch angetrieben. Ein Lack 810 wird mittig auf die oben liegende Fläche 802, 902, 1001, 1101, 1201, 1301 zugeführt, welcher sich infolge der Rotationsbewegung ganzflächig verteilt und über die jeweilige Zylinderrandfläche 803, 903, 1003, 1103, 1203, 1303 abfließt. Die Rotationsgeschwindigkeit ω_{R} ist im Falle der Rückseitenbeschichtung, wie in den Figuren 6a) und 6b) gezeigt so groß zu wählen, dass die Fliehkraft ein Rückfließen zur Rückflächenmitte verhindert.

Alle Brillenlinsen 800, 900, 1000, 1100, 1200, 1300 weisen Abrundungen 804, 805, 904, 905, 1004, 1005, 1104, 1105, 1204, 1205, 1304, 1305 an den Übergängen zwischen deren Vorderflächen 801, 901, 1001, 1101, 1201, 1301 und deren Zylinderrandflächen 803, 903, 1003, 1103, 1203, 1303 sowie zwischen deren Rückflächen 802, 902, 1002, 1102, 1202, 1302 und deren Zylinderrandflächen 803, 903, 1003, 1103, 1203, 1303 auf, die sich in etwa 1 mm in die jeweilige optisch wirksame Fläche 801, 901, 1001, 1101, 1201, 1301, 802, 902, 1002, 1102, 1202, 1302 hinein erstrecken. Dieser abgerundete Übergang 804, 805, 904, 905, 1004, 1005, 1104, 1105, 1204, 1205, 1304, 1305 unterstützt das Abschleuderverhalten so positiv, dass Rotationsgeschwindigkeiten ω_{R} vervielfacht werden können und es zu keinem Lackabriss (fliegende Tropfen) kommt, sondern die Lackanhäufung sanft auf den abgerundeten Übergang 804, 805, 904, 905, 1004, 1005, 1104, 1105, 1204, 1205, 1304, 1305 und zum Zylinderrand 803, 903, 1003, 1103, 1203, 1303 transportiert wird. Es bleibt wenig oder keine Lackanhäufung auf der optischen Fläche 802, 902, 1001, 1101, 1201, 1301 zurück und der nutzbare Durchmesser wird größer. und der Zylinderrandfläche 703 unterstützt das Ablaufverhalten so positiv, dass keine Lackanhäufung auf der jeweiligen optischen Fläche 701, 702 zurückbleibt und der nutzbare Durchmesser größer wird.

Die Figur 6 zeigt unterschiedliche Brillenlinsen 800, 900, 1000, 1100, 1200, 1300 nach der Erfindung bei einem Rotationsbeschichtungsprozess. Die Teilfigur 6a) zeigt eine Rückflächenbeschichtung einer Pluslinse 800. Die Teilfigur 6b) zeigt eine Rückflächenbeschichtung einer Minuslinse 900. Die Teilfigur 6c) zeigt eine Vorderflächenbeschichtung eines Halbfabrikats 1000 mit einer Basiskurve von 0,5 dpt. Die Teilfigur 6d) zeigt eine Vorderflächenbeschichtung eines Halbfabrikats 1100 mit einer Basiskurve von 12 dpt. Die Teilfigur 6e) zeigt eine Vorderflächenbeschichtung einer Pluslinse 1200 und die Teilfigur 6f) zeigt eine Vorderflächenbeschichtung einer Minuslinse 1300.

Die Brillenlinsen 800, 900, 1000, 1100, 1200, 1300 werden mit der Winkelgeschwindigkeit ω_{R} rotatorisch angetrieben. Ein Lack 810 wird mittig auf die oben liegende Fläche 802, 902, 1001, 1101, 1201, 1301 zugeführt, welcher sich infolge der Rotationsbewegung ganzflächig verteilt und über die jeweilige Zylinderrandfläche 803, 903, 1003, 1103, 1203, 1303 abfließt. Die Rotationsgeschwindigkeit ω_{R} ist im Falle der Rückseitenbeschichtung, wie in den Figuren 6a) und 6b) gezeigt so groß zu wählen, dass die Fliehkraft ein Rückfließen zur Rückflächenmitte verhindert.

Alle Brillenlinsen 800, 900, 1000, 1100, 1200, 1300 weisen Abrundungen 804, 805, 904, 905, 1004, 1005, 1104, 1105, 1204, 1205, 1304, 1305 an den Übergängen zwischen deren Vorderflächen 801, 901, 1001, 1101, 1201, 1301 und deren Zylinderrandflächen 803, 903, 1003, 1103, 1203, 1303 sowie zwischen deren Rückflächen 802, 902, 1002, 1102, 1202, 1302 und deren Zylinderrandflächen 803, 903, 1003, 1103, 1203, 1303 auf, die sich in etwa 1 mm in die jeweilige optisch wirksame Fläche 801, 901, 1001, 1101, 1201, 1301, 802, 902, 1002, 1102, 1202, 1302 hinein erstrecken. Dieser abgerundete Übergang 804, 805, 904, 905, 1004, 1005, 1104, 1105, 1204, 1205, 1304, 1305 unterstützt das Abschleuderverhalten so positiv, dass Rotationsgeschwindigkeiten ω_{R} vervielfacht werden können und es zu keinem Lackabriss (fliegende Tropfen) kommt, sondern die Lackanhäufung sanft auf den abgerundeten Übergang 804, 805, 904, 905, 1004, 1005, 1104, 1105, 1204, 1205, 1304, 1305 und zum Zylinderrand 803, 903, 1003, 1103, 1203, 1303 transportiert wird. Es bleibt wenig oder keine Lackanhäufung auf der optischen Fläche 802, 902, 1001, 1101, 1201, 1301 zurück und der nutzbare Durchmesser wird größer.

## Patentansprüche

1. Verfahren zur Herstellung eines Brillenglas-Halb- oder -Fertigfabrikats (100, 200, 300, 400, 500, 600, 700, 800, 900, 1000, 1100, 1200, 1300) mit
- einer Vorderfläche (101, 201, 301, 401, 501, 601, 701, 801, 901, 1001, 1101, 1201, 1301),
- einer Rückfläche (102, 202, 302, 402, 502, 602, 702, 802, 902, 1002, 1102, 1202, 1302),
- einer Zylinderrandfläche (103, 203, 303, 403, 503, 603, 703, 803, 903, 1003, 1103, 1203, 1303),
- einer vorderen Kantenfläche (104, 204, 304, 404, 504, 604, 804, 904, 1004, 1104, 1204, 1304) mit einem Vorderflächenübergang (204a) zu der Vorderfläche (101, 201, 301, 401, 501, 601, 701, 801, 901, 1001, 1101, 1201, 1301) und einem vorderen Zylinderrandflächenübergang (204b) zu der Zylinderrandfläche (103, 203, 303, 403, 503, 603, 703, 803, 903, 1003, 1103, 1203, 1303) und/oder
einer hinteren Kantenfläche (105, 205, 305, 405, 505, 605, 805, 905, 1005, 1105, 1205, 1305) mit einem Rückflächenübergang (205a) zu der Rückfläche (102, 202, 302, 402, 502, 602, 702, 802, 902, 1002, 1102, 1202, 1302) und einem hinteren Zylinderrandflächenübergang (205b) zu der Zylinderrandfläche (103, 203, 303, 403, 503, 603, 703, 803, 903, 1003, 1103, 1203, 1303) wobei der Vorderflächenübergang (204a) mit einer Abrundung versehen wird und/oder der Rückflächenübergang (205a) mit einer Abrundung versehen wird, wobei die Abrundung des Vorderflächenübergangs (204a) und/oder die Abrundung des Rückflächenübergangs (205a) angegossen wird; **dadurch gekennzeichnet, dass** der hintere Zylinderrandflächenübergang (205b) mit einer Abrundung versehen wird, die angegossen wird.

2. Verfahren nach Anspruch 1, **dadurch gekennzeichnet, dass** der vordere Zylinderrandflächenübergang (204b) mit einer Abrundung versehen wird.

3. Verfahren nach einem der vorangegangenen Ansprüche
**dadurch gekennzeichnet, dass**
- das Brillenglas-Halb- oder -Fertigfabrikat (100, 200, 300, 400, 500, 600, 700, 800, 900, 1000, 1100, 1200, 1300) mit dem als Abrundung ausgebildeten Vorderflächenübergang (204a) und/oder mit dem als Abrundung ausgebildeten Rückflächenübergang (205a) nassbeschichtet wird.

## Claims

1. Method for producing a spectacle lens semi-finished or finished product (100, 200, 300, 400, 500, 600, 700, 800, 900, 1000, 1100, 1200, 1300) comprising
- a front surface (101, 201, 301, 401, 501, 601, 701, 801, 901, 1001, 1101, 1201, 1301),
- a rear surface (102, 202, 302, 402, 502, 602, 702, 802, 902, 1002, 1102, 1202, 1302),
- a cylinder rim surface (103, 203, 303, 403, 503, 603, 703, 803, 903, 1003, 1103, 1203, 1303),
- a front edge surface (104, 204, 304, 404, 504, 604, 804, 904, 1004, 1104, 1204, 1304) with a front surface transition (204a) to the front surface (101, 201, 301, 401, 501, 601, 701, 801, 901, 1001, 1101, 1201, 1301) and a front cylinder rim surface transition (204b) to the cylinder rim surface (103, 203, 303, 403, 503, 603, 703, 803, 903, 1003, 1103, 1203, 1303), and/or
- a rear edge surface (105, 205, 305, 405, 505, 605, 805, 905, 1005, 1105, 1205, 1305) with a rear surface transition (205a) to the rear surface (102, 202, 302, 402, 502, 602, 702, 802, 902, 1002, 1102, 1202, 1302) and a rear cylinder rim surface transition (205b) to the cylinder rim surface (103, 203, 303, 403, 503, 603, 703, 803, 903, 1003, 1103, 1203, 1303),
wherein the front surface transition (204a) is provided with a rounding and/or the rear surface transition (205a) is provided with a rounding,
wherein the rounding of the front surface transition (204a) and/or the rounding of the rear surface transition (205a) is cast;
**characterized in that** the rear cylinder rim surface transition (205b) is provided with a rounding which is cast.

2. Method according to Claim 1, **characterized in that** the front cylinder rim surface transition (204b) is provided with a rounding.

3. Method according to either of the preceding claims,
**characterized in that**
- the spectacle lens semi-finished or finished product (100, 200, 300, 400, 500, 600, 700, 800, 900, 1000, 1100, 1200, 1300) is wet-coated with the front surface transition (204a) in the form of a rounding and/or with the rear surface transition (205a) in the form of a rounding.

## Revendications

1. Procédé de fabrication d'un verre de lunettes semi-fini ou fini (100, 200, 300, 400, 500, 600, 700, 800, 900, 1000, 1100, 1200, 1300) avec
- une surface avant (101, 201, 301, 401, 501, 601, 701, 801, 901, 1001, 1101, 1201, 1301),
- une surface arrière (102, 202, 302, 402, 502, 602, 702, 802, 902, 1002, 1102, 1202, 1302),
- une surface de bord de cylindre (103, 203, 303, 403, 503, 603, 703, 803, 903, 1003, 1103, 1203, 1303),
- une surface de bord avant (104, 204, 304, 404, 504, 604, 804, 904, 1004, 1104, 1204, 1304) avec une transition (204a) de surface avant vers la surface avant (101, 201, 301, 401, 501, 601, 701, 801, 901, 1001, 1101, 1201, 1301) et une transition (204b) de surface de bord avant de cylindre vers la surface de bord de cylindre (103, 203, 303, 403, 503, 603, 703, 803, 903, 1003, 1103, 1203, 1303) et/ou
une surface de bord arrière (105, 205, 305, 405, 505, 605, 805, 905, 1005, 1105, 1205, 1305) ayant une transition (205a) de surface arrière vers la surface arrière (102, 202, 302, 402, 502, 602, 702, 802, 902, 1002, 1102, 1202, 1302) et une transition (205b) de surface de bord arrière de cylindre vers la surface de bord de cylindre (103, 203, 303, 403, 503, 603, 703, 803, 903, 1003, 1103, 1203, 1303), la transition de surface avant (204a) étant pourvue d'un arrondi et/ou la transition de surface arrière (205a) étant pourvue d'un arrondi, l'arrondi de la transition de surface avant (204a) et/ou l'arrondi de la transition de surface arrière (205a) étant moulés ;
**caractérisé en ce que** la transition de surface de bord arrière du cylindre (205b) est pourvue d'un arrondi qui est moulé.

2. Procédé selon la revendication 1, **caractérisé en ce que** la transition (204b) de surface de bord de cylindre avant est pourvue d'un arrondi.

3. Procédé selon l'une des revendications précédentes,
**caractérisé en ce que**
- le produit semi-fini ou fini de verre de lunettes (100, 200, 300, 400, 500, 600, 700, 800, 900, 1000, 1100, 1200, 1300) est revêtu par voie humide avec la transition de surface avant (204a) conçue sous la forme d'un arrondi et/ou avec la transition de surface arrière (205a) conçue sous la forme d'un arrondi.
